# EUROPÄISCHE PATENTANMELDUNG

(11) **EP 3 185 017 A1**
(43) Veröffentlichungstag der Anmeldung: **28.06.2017**
(21) Anmeldenummer: 15202464.2
(22) Anmeldetag: 23.12.2015
(51) Int. Cl.: G01P 5/26, G01P 5/14, G01P 21/02, G01C 13/00, G01F 1/00, G01F 1/66

(54) **DURCHFLUSSMESSGERÄT MIT WINDGESCHWINDIGKEITSSENSOR**

(71) Anmelder: VEGA Grieshaber KG, 77709 Wolfach (DE)
(72) Erfinder: WELLE, Roland, 77756 Hausach (DE); DIETERLE, Levin, 77709 Oberwolfach (DE); BÖRSIG, Jörg, 77776 Schapbach (DE)
(74) Vertreter: Maiwald Patentanwalts GmbH

(57) **Zusammenfassung**

Die Erfindung betrifft ein Durchflussmessgerät, welches den Pegelstand eines Gewässers, die Fließgeschwindigkeit des Gewässers an einem bestimmten Ort sowie die Windgeschwindigkeit am Ort des Messgeräts ermittelt, und diese drei Messdaten in die Berechnung der mittleren Gewässerfließgeschwindigkeit und/oder Durchflussberechnung mit einfließen lässt. Durch die Beachtung der Windgeschwindigkeit oberhalb des Gewässers kann die Durchflussberechnung verbessert werden.

## Beschreibung

### Gebiet der Erfindung

Die Erfindung betrifft die Durchflussmessung. Insbesondere betrifft die Erfindung ein Durchflussmessgerät mit einem berührungslos messenden Fließgeschwindigkeitssensor und einem Windgeschwindigkeitssensor zum Erfassen der Windgeschwindigkeit am Ort des Messgeräts. Darüber hinaus betrifft die Erfindung ein Verfahren zur Durchflussmessung, ein Programmelement und ein computerlesbares Medium.

### Technischer Hintergrund

Bei der Überwachung von Gewässern sind verschiedene physikalische Messwerte von Bedeutung. Diese Daten können der statistischen Auswertung und als Grundlage für Planungen von baulichen Maßnahmen, als Hochwasserwarnung oder im Abwasserbereich zur Umlegung der Abwasserbehandlungskosten dienen.

Es sind Messsysteme bekannt, welche die Daten von verschiedenen Sensoren verwenden, welche in getrennten Auswertesystemen gesammelt und ausgewertet werden.

Bei der Messung von Wasserpegeln setzt sich die Radartechnik immer mehr durch, da sie gegenüber anderen Messprinzipien, wie z. B. Ultraschall, von Umwelteinflüssen, wie Temperatur, Wind oder Regen, nicht oder nur geringfügig beeinflusst wird.

DE 10 2013 213 345 A1 beschreibt ein Füllstandmessgerät zur Fließgeschwindigkeitsbestimmung eines Gewässers, dessen Sendesignal in zwei unterschiedliche Richtungen abgestrahlt werden kann, um eine Pegelstandmessung und eine lokale Dopplermessung zur Fließgeschwindigkeitsbestimmung durchzuführen.

### Zusammenfassung der Erfindung

Es ist eine Aufgabe der Erfindung, die Bestimmung des Durchflusses eines Gewässers zu verbessern.

Diese Aufgabe wird durch die Merkmale der unabhängigen Patentansprüche gelöst. Weiterbildungen der Erfindung ergeben sich aus den Unteransprüchen und der nachfolgenden Beschreibung.

Ein erster Aspekt der Erfindung betrifft ein Durchflussmessgerät, welches einen vorzugsweise berührungslos messenden Fließgeschwindigkeitssensor zum Erfassen einer lokalen Fließgeschwindigkeit des Gewässers aufweist. Darüber hinaus weist das Durchflussmessgerät einen Windgeschwindigkeitssensor zum Erfassen der Windgeschwindigkeit vorzugsweise am Ort, an dem das Messgerät angebracht ist, auf. Fließgeschwindigkeitssensor und Windgeschwindigkeitssensor sind Teil des Durchflussmessgeräts und miteinander verbunden. Es ist eine Steuereinheit vorgesehen, die dem Berechnen der mittleren Fließgeschwindigkeit und/oder des Durchflusses des Gewässers dient. Für diese Berechnung verwendet die Steuereinheit sowohl die vom Fließgeschwindigkeitssensor als auch die vom Windgeschwindigkeitssensor erfassten Daten, also insbesondere die vom Sensor bestimmte lokale Fließgeschwindigkeit des Gewässers und die Windgeschwindigkeit am Ort des Messgeräts.

Neben der lokalen Fließgeschwindigkeit und der Windgeschwindigkeit kann vorgesehen sein, dass noch weitere Messdaten berücksichtigt werden, insbesondere der aktuelle Pegelstand des Gewässers.

In die Berechnung können darüber hinaus noch weitere Daten einfließen, welche beispielsweise im Durchflussmessgerät gespeichert sind. Hierbei kann es sich insbesondere um die Profilform der Gewässerrinne und die Position (x, y) der lokalen Fließgeschwindigkeitsmessung handeln, also um den Ort, an dem der Messstrahl des Fließgeschwindigkeitssensors auf die Oberfläche des Gewässers trifft.

Wenn der Ort des Messgeräts und damit der Ort des Windgeschwindigkeitssensors bekannt ist, kann darüber hinaus vorgesehen sein, dass aus der dort gemessenen Windgeschwindigkeit auf die voraussichtliche Windgeschwindigkeit im Bereich der Oberfläche des Gewässers rückgeschlossen wird.

Eine Auswahl oder sämtliche der oben genannten Berechnungen kann auf Basis einer Eichung erfolgen, welche beispielsweise durch eine in einem Speicher des Messgeräts abgelegten Tabelle abgebildet wird.

Gemäß einer Ausführungsform der Erfindung ist der Windgeschwindigkeitssensor an dem Fließgeschwindigkeitssensor angebracht oder in den Fließgeschwindigkeitssensor integriert. Beispielsweise kann der Windgeschwindigkeitssensor an das Gehäuse des Fließgeschwindigkeitssensors angebracht sein, insbesondere an dessen Oberseite, oder durch das Gehäuse hindurchgeführt sein.

Gemäß einer Ausführungsform der Erfindung ist der Windgeschwindigkeitssensor auch zum Erfassen der Windrichtung ausgeführt, wobei die erfasste Windrichtung von der Steuereinheit zum Berechnen der mittleren Fließgeschwindigkeit und/oder des Durchflusses des Gewässers mit zu berücksichtigen ist.

Insbesondere können mehrere Windgeschwindigkeitssensoren vorgesehen sein, welche unterschiedliche Vorzugsrichtungen aufweisen und deren Messergebnisse gemeinsam berücksichtigt werden, um einen möglichst genauen Wert für die tatsächliche Windgeschwindigkeit und Windrichtung zu erhalten.

Diese verschiedenen Sensoren können in einer Gesamteinheit integriert sein oder in Einzeleinheiten an verschiedenen Orten des Fließgeschwindigkeitssensors angebracht sein.

Gemäß einer weiteren Ausführungsform der Erfindung ist der Fließgeschwindigkeitssensor zur Durchführung einer Pegelstandmessung und einer Dopplermessung ausgeführt, deren Messergebnisse von der Steuereinheit zum Berechnen der mittleren Fließgeschwindigkeit und/oder des Durchflusses des Gewässers zu berücksichtigen sind.

Gemäß einer weiteren Ausführungsform der Erfindung weist der Windgeschwindigkeitssensor einen rohrartigen oder röhrenförmigen Bereich auf, der dem Durchleiten der Luft dient. Dieser rohrartige Bereich weist an verschiedenen Orten einen verschiedenen Querschnitt auf, sodass sich durch das Durchleiten der Luft ein Druckgradient ergibt, der von an oder in dem rohrartigen Bereich angebrachten Drucksensoren erfasst werden kann, um die Windgeschwindigkeit zu bestimmen.

Gemäß einer Ausführungsform der Erfindung weist der Windgeschwindigkeitssensor zwei parallel zueinander angeordnete Platten oder Teller zum Durchleiten von Luft auf, deren Windgeschwindigkeit zu erfassen ist. Der Hohlraum, der zwischen den Platten entsteht, weist an verschiedenen Orten einen unterschiedlichen Querschnitt auf, sodass auch hier Druckdifferenzen entstehen, welche durch entsprechend angebrachte Drucksensoren erfasst werden können, um die Windgeschwindigkeit und ggf. auch die Windrichtung zu bestimmen.

Diese Anordnung kann rotations- bzw. radialsymmetrisch ausgeführt sein, sodass ganz unterschiedliche Windrichtungen von 0 bis 360 Grad erfasst werden können.

Die hierfür verwendeten Drucksensoren können beispielsweise eine erste Gruppe aufweisen, die ringförmig angeordnet ist. Bei den ringförmig angeordneten Drucksensoren kann es sich beispielsweise um drei, vier oder mehr Drucksensoren handeln, jeweils mit konstantem Abstand zum nächsten Nachbarn.

Gemäß einer weiteren Ausführungsform der Erfindung ist die Steuereinheit zum Berechnen der mittleren Fließgeschwindigkeit und/oder des Durchflusses des Gewässers unter Berücksichtigung des Ortes der lokalen Fließgeschwindigkeit des Gewässers ausgeführt. Hierfür kann das Messgerät einen Positionssensor und/oder einen Lagesensor aufweisen, der es dem Messgerät ermöglicht, den Ort der lokalen Fließgeschwindigkeitsmessung zu bestimmen, indem die Ausrichtung und die Lage des Messgeräts, und insbesondere seiner Antenne, bestimmt wird. Dies ist vorteilhaft, da abhängig vom Rinnenquerschnitt der Gewässerrinne, der Pegelstandhöhe, dem Gefälle des Gewässers und dem Messort der lokalen Fließgeschwindigkeit die mittlere Fließgeschwindigkeit und/oder der Durchfluss berechnet wird, sodass sich nach Berücksichtigung der Windgeschwindigkeit eine möglichst genaue mittlere Fließgeschwindigkeits- und/oder Durchflussbestimmung ergibt.

Gemäß einer weiteren Ausführungsform der Erfindung ist der Windgeschwindigkeitssensor auf der Oberseite des Gehäuses des Fließgeschwindigkeitssensors angebracht. Alternativ kann der Windgeschwindigkeitssensor in dem Gehäuse des Fließgeschwindigkeitssensors angeordnet sein. Auch ist es möglich, dass ein Teil des Windgeschwindigkeitssensors auf der Oberseite des Gehäuses angeordnet ist und ein anderer Teil an einer anderen Stelle des Gehäuses.

Insbesondere können mehrere Windgeschwindigkeitssensoren vorgesehen sein, welche unterschiedliche Windmessrichtungen aufweisen.

Gemäß einer weiteren Ausführungsform der Erfindung ist der Fließgeschwindigkeitssensor als Radargerät ausgeführt. Insbesondere kann das Messgerät zum Anschluss an eine 4-20mA Zweidraht-Leitung ausgeführt sein, über welche es gleichzeitig mit Energie beliefert wird und einen Messwert übertragen kann, der proportional zum fließenden Strom ist. Auch die Kommunikation (der Datenaustausch) kann über die Zweidraht-Leitung erfolgen.

Gemäß einem weiteren Aspekt der Erfindung ist ein Verfahren zur Durchflussmessung angegeben, bei dem zunächst eine Erfassung einer lokalen Fließgeschwindigkeit des Gewässers durch ein Durchflussmessgerät erfolgt. Gleichzeitig erfolgt die Erfassung der Windgeschwindigkeit am Ort des Messgeräts. Aus den gewonnenen Daten wird dann die mittlere Fließgeschwindigkeit und/oder der Durchfluss des Gewässers unter Berücksichtigung der lokalen Fließgeschwindigkeit und der Windgeschwindigkeit bestimmt. In diese Berechnung können noch weitere Daten einfließen, wie oben beschrieben.

Ein weiterer Aspekt der Erfindung betrifft ein Programmelement, das, wenn es auf dem Prozessor eines Durchflussmessgeräts ausgeführt wird, das Messgerät anleitet, die oben und im Folgenden beschriebenen Schritte durchzuführen.

Gemäß einem weiteren Aspekt der Erfindung ist ein computerlesbares Medium angegeben, auf dem ein oben beschriebenes Programmelement gespeichert ist.

Im Folgenden werden Ausführungsbeispiele der Erfindung unter Bezugnahme auf die Figuren beschrieben. Darin bezeichnen gleiche Bezugszeichen gleiche oder ähnliche Elemente. Gleiche oder ähnliche Elemente können aber auch durch unterschiedliche Bezugszeichen bezeichnet sein.

### Kurze Beschreibung der Figuren

Fig. 1 zeigt ein Durchflussmessgerät gemäß einem Ausführungsbeispiel der Erfindung.
Fig. 2 zeigt den Querschnitt einer Gewässerrinne, in dem das zu vermessende Gewässer fließt.
Fig. 3 zeigt einen Windgeschwindigkeitssensor eines Durchflussmessgeräts gemäß einem Ausführungsbeispiel der Erfindung.
Fig. 4 zeigt einen Windgeschwindigkeitssensor eines Durchflussmessgeräts gemäß einem weiteren Ausführungsbeispiel der Erfindung.
Fig. 5 zeigt eine Querschnittsdarstellung des Sensors der Fig. 4.
Fig. 6 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßgeblich.

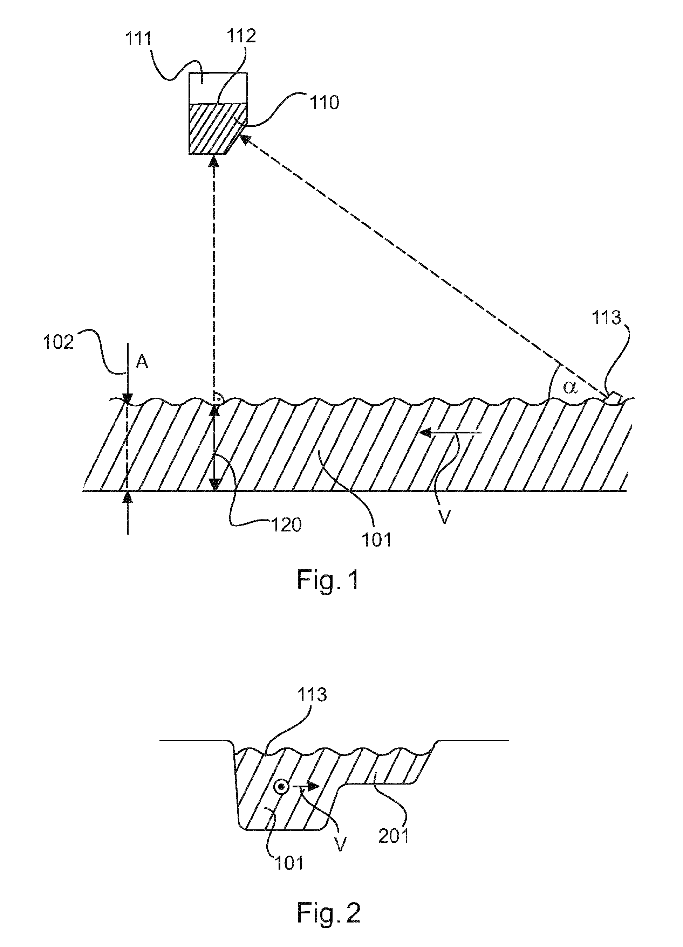

Fig. 1 zeigt ein Durchflussmessgerät gemäß einem Ausführungsbeispiel der Erfindung. Das Messgerät weist einen berührungslos messenden Fließgeschwindigkeitssensor 110, beispielsweise in Form eines Füllstandradars mit zwei Antennen unterschiedlicher Hauptabstrahlrichtung, auf, so dass zwei Messsignale in unterschiedliche Richtungen abgestrahlt werden können. Das erste Messsignal wird senkrecht zur Oberfläche des Gewässers 101 abgestrahlt und das zweite Signal in einem Winkel α hierzu.

Aus dem ersten Signal kann der Pegelstand 120 gewonnen werden und aus dem zweiten Signal die Fließgeschwindigkeit v des Gewässers am Ort 113, unter Verwendung des Dopplerprinzips.

An dem Fließgeschwindigkeitssensor 110 ist ein Windgeschwindigkeitssensor 111 angebracht, der sich im Ausführungsbeispiel der Fig. 1 auf der Oberseite 112 des Fließgeschwindigkeitssensors befindet. Dieser Windgeschwindigkeitssensor 111 dient dem Erfassen der Windgeschwindigkeit am Ort des Messgeräts 111, 110. Die erfasste Windgeschwindigkeit wird herangezogen, um die Fließgeschwindigkeit des Gewässers 101 genauer bestimmen zu können.

Das kombinierte Pegel/Dopplermessgerät 110, welches senkrecht nach unten den Pegel 120 und unter einem Winkel α die Oberflächengeschwindigkeit des fließenden Mediums 101 misst, besitzt einen zusätzlichen Windsensor 111.

Fig. 2 zeigt den Querschnitt des Gerinnes 201 entlang der Schnittlinie 102 der Fig. 1.

Sowohl die Windgeschwindigkeit, der Pegelstand 120, die Fließgeschwindigkeit der Gewässeroberfläche am Ort 113 als auch die Abmessungen des Gerinnes, sowie die Position 113, an welcher die Oberflächenfließgeschwindigkeit des Gewässers gemessen wird, können in die Berechnung der mittleren Fließgeschwindigkeit und/oder des Durchflusses mit einfließen.

Die Pegelmessung und die Dopplermessung können separat durchgeführt werden. Aus der Kenntnis des Gerinnequerschnitts und unter Berücksichtigung der Fließgeschwindigkeit am Ort 113 sowie des Pegelstandes kann die Durchflussmenge in guter Näherung bestimmt werden. Solche Informationen sind insbesondere für die Hochwasservorhersage und Warnung an Flüssen oder die Aufteilung der Kosten an Klärwerken interessant. Aufgrund der geringen Eindringtiefe von Radarwellen in Wasser wird von dem Durchflussmessgerät insbesondere die Geschwindigkeit an der Oberfläche des Gewässers ermittelt.

In einer Vielzahl von Anwendungen wird die Geschwindigkeit des Oberflächenwassers durch die oberflächennahen Luftströmungen verändert. Somit können sich Messfehler in der eigentlichen Durchflussmessung ergeben, wenn von einer falschen Geschwindigkeit des Mediums ausgegangen wird.

Durch die Integration des Windsensors 111 in das Durchflussmessgerät wird dieses in die Lage versetzt, die ermittelte Dopplergeschwindigkeit zu verifizieren oder auch zu korrigieren. Die von dem Messgerät ermittelte Dopplergeschwindigkeit hängt mit der mittleren Fließgeschwindigkeit des Gewässers zusammen, muss jedoch nicht mit dieser übereinstimmen. Die mittlere Fließgeschwindigkeit hängt insbesondere von weiteren Parametern ab, wie Gerinnetiefe, Gerinneform, Beschaffenheit der Gerinneoberfläche (glatt oder steinig), Pegelhöhe, Gefälle und natürlich der Windgeschwindigkeit sowie dem Messort der Fließgeschwindigkeit.

Zur tatsächlichen Berechnung der durchschnittlichen Fließgeschwindigkeit des Gewässers bzw. des Durchflusses kann eine Korrekturtabelle im Messgerät abgelegt sein, welche anhand der gemessenen Dopplergeschwindigkeit, des Pegelstandes und/oder der aktuellen Windgeschwindigkeit und -richtung eine näherungsweise Bestimmung der Fließgeschwindigkeit des Gewässers ermöglicht.

Durch die berührungslose Messung der Fließgeschwindigkeit außerhalb des fließenden Mediums ist zudem eine Beschädigung bzw. Verschmutzung des Sensors durch Treibgut bzw. Schlamm o. Ä. nicht möglich oder zumindest unwahrscheinlich. Somit ist das Durchflussmessgerät im Gegensatz zu bekannten Messgeräten sehr robust und weniger fehleranfällig.

Insbesondere können in der "Korrekturtabelle" verschiedene Messszenarien gespeichert sein, welche unterschiedliche Gerinneformen, Gefälle und Messorte für Windgeschwindigkeit und/oder Fließgeschwindigkeit berücksichtigen.

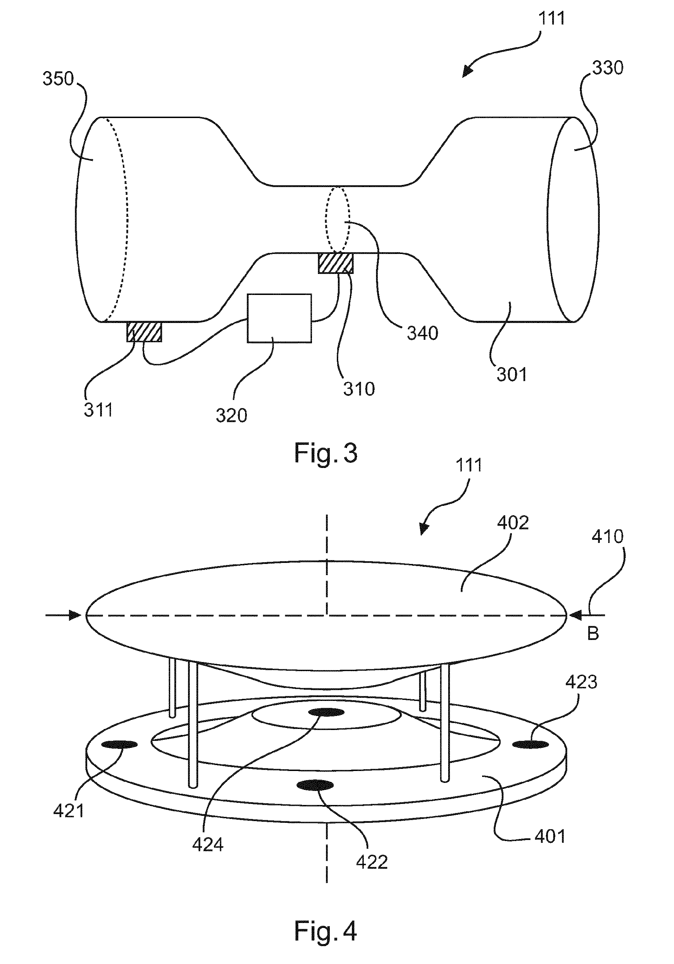

Fig. 3 zeigt einen Windsensor 111 zur Integration in einem Durchflussmessgerät gemäß einem Ausführungsbeispiel der Erfindung. Der Windsensor weist einen röhrenförmigen Kanal 301 auf, der in Fließrichtung des Gewässers ausgerichtet sein kann. Der Kanal weist einen beispielsweise kreisrunden Querschnitt auf, dessen Durchmesser an den Enden 330, 350 des Kanals größer ist als in dessen Mitte 340. In der Mitte des Kanals bzw. Rohres verjüngt sich somit dessen Durchmesser, sodass sich die Windgeschwindigkeit an dieser Stelle erhöht und somit der Druck der strömenden Luft an dieser Stelle reduziert ist.

Durch die Ermittlung des Differenzdrucks zwischen den entsprechend empfindlichen Drucksensoren 310 und 311 in der daran angeschlossenen Auswerteeinheit (Prozessor) 320 lässt sich auf den Betrag der Windgeschwindigkeit entlang der Fließrichtung des Gewässers zurückschließen.

Die Drucksensoren 310, 311 sind beispielsweise an der Außenseite des röhrenförmigen Kanals 301 angeordnet, haben jedoch Zugang zum Inneren des Kanals, um dort den Druck messen zu können.

Es können natürlich auch mehr als zwei Drucksensoren angeordnet sein, was zur Folge haben kann, dass die Windgeschwindigkeit noch genauer bestimmt werden kann.

Fig. 4 zeigt einen Windgeschwindigkeitssensor 111 für ein Durchflussmessgerät gemäß einem weiteren Ausführungsbeispiel der Erfindung. In diesem Ausführungsbeispiel weist der Sensor zwei rotationssymmetrische Platten 401, 402 auf, deren Abstand sich in der Mitte durch eine Auswölbung reduziert. Um diese Auswölbung herum sind hierbei mindestens drei Sensoren im Winkel von 120 Grad zueinander, beispielsweise aber auch vier Sensoren 421, 422, 423 (der vierte Sensor ist nicht zu sehen) im Winkel von 90 Grad konzentrisch zum Mittelpunkt einer der Platten angeordnet. Es können auch mehr Drucksensoren entlang dieses Kreises im Außenbereich der unteren Platte angeordnet sein. Ebenso können auch entsprechende Drucksensoren auf der oberen Platte angeordnet sein. Im Mittelpunkt befindet sich ein weiterer Drucksensor 424, sodass der Differenzdruck zwischen dem Außenbereich, in dem die vier Sensoren 421, 422, 423 (der vierte ist nicht zu sehen) angeordnet sind, und dem Mittelbereich, in dem der Sensor 424 angeordnet ist, bestimmt werden kann.

Der Windgeschwindigkeitssensor ist in einem Winkelbereich von 360 Grad (also nach allen Seiten hin) offen, sodass neben der Windgeschwindigkeit auch die Windrichtung bestimmt werden kann. Alternativ können die Drucksensoren auch auf der Schrägfläche 450 der oberen Platte 402 oder auf der Schnittfläche 430 der unteren Platte 401 angeordnet sein. Auch ist die Anordnung weiterer Drucksensoren möglich. Sämtliche Drucksensoren sind mit dem Prozessor 320 (Steuereinheit) verbunden, welcher die Berechnung von Windgeschwindigkeit und Windrichtung vornehmen kann.

Beispielsweise sind die Drucksensoren in die entsprechende Platte integriert und weisen einen Zugang zu dem Raum zwischen den beiden Platten auf, durch welche der Wind hindurchweht.

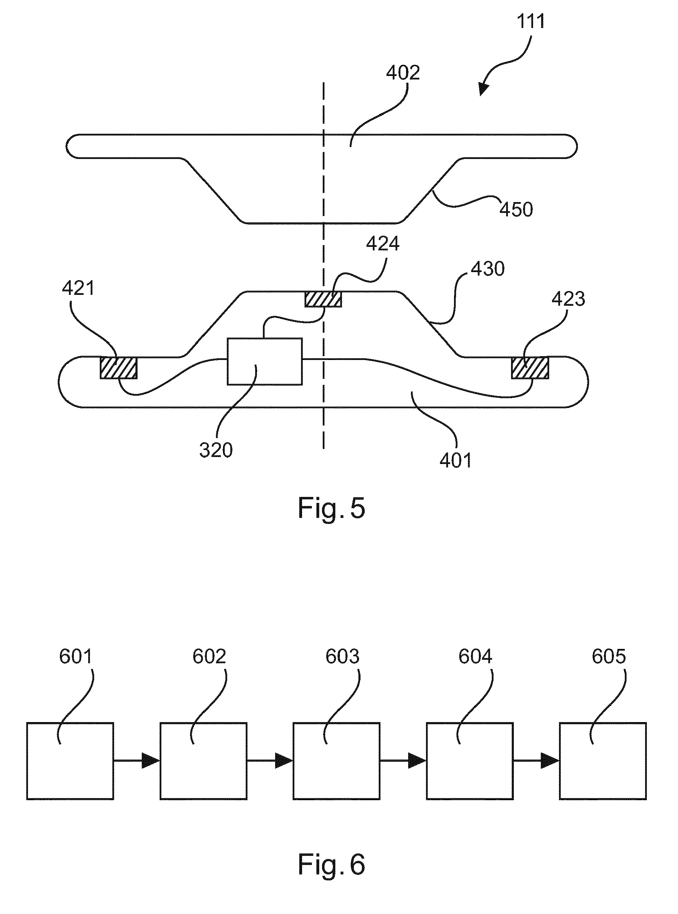

Fig. 5 zeigt eine Querschnittsdarstellung des Windsensors der Fig. 4 entlang der Linie 410. Die Verjüngung sowohl im radialsymmetrischen Fall als auch im Rohr gemäß Fig. 3 ist derart, dass sich keine unerwünschten Verwirbelungen und Turbulenzen entwickeln.

Fig. 6 zeigt ein Flussdiagramm eines Verfahrens gemäß einem Ausführungsbeispiel der Erfindung. In Schritt 601 erfolgt eine Pegelmessung zur Bestimmung des Pegels des fließenden Gewässers. In Schritt 602 erfolgt eine Fließgeschwindigkeitsbestimmung an einem bestimmten Bereich des Gewässers, beispielsweise durch eine Dopplermessung. In Schritt 603 erfolgt darüber hinaus die Bestimmung der Windgeschwindigkeit am Ort des Durchflussmessgeräts und in Schritt 604 wird der Durchfluss des Gewässers bestimmt, indem hierfür die drei erfassten Messwerte berücksichtigt werden. Die Schritte 601 bis 603 können auch in anderer Reihenfolge und/oder gleichzeitig durchgeführt werden.

In Schritt 605 wird der vom Gerät berechnete Durchfluss an eine externe Einheit übermittelt.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Durchflussmessgerät, aufweisend:
einen berührungslos messenden Fließgeschwindigkeitssensor (110) zum Erfassen einer lokalen Fließgeschwindigkeit eines Gewässers;
einen Windgeschwindigkeitssensor (111) zum Erfassen der Windgeschwindigkeit;
eine Steuereinheit (320) zum Berechnen der mittleren Fließgeschwindigkeit des Gewässers unter Berücksichtigung der lokalen Fließgeschwindigkeit und der Windgeschwindigkeit.

2. Durchflussmessgerät nach Anspruch 1,
wobei der Windgeschwindigkeitssensor (111) an dem Fließgeschwindigkeitssensor (110) angebracht ist oder in den Fließgeschwindigkeitssensor integriert ist.

3. Durchflussmessgerät nach Anspruch 1 oder 2,
wobei der Windgeschwindigkeitssensor (111) zum Erfassen der Windrichtung ausgeführt ist;
wobei die erfasste Windrichtung von der Steuereinheit (320) zum Berechnen des Durchflusses des Gewässers zu berücksichtigen ist.

4. Durchflussmessgerät nach einem der vorhergehenden Ansprüche,
wobei der Fließgeschwindigkeitssensor (110) zur Durchführung einer Pegelstandmessung und einer Dopplermessung ausgeführt ist, deren Messergebnisse von der Steuereinheit (320) zum Berechnen der mittleren Fließgeschwindigkeit oder des Durchflusses des Gewässers zu berücksichtigen sind.

5. Durchflussmessgerät nach einem der vorhergehenden Ansprüche,
wobei der Windgeschwindigkeitssensor (111) einen rohrartigen Bereich (301, 302) mit variierendem Querschnitt zum Durchleiten von Luft, deren Windgeschwindigkeit zu erfassen ist, aufweist;
wobei an oder in dem rohrartigen Bereich mehrere Drucksensoren (310, 311) angeordnet sind, um einen lokalen Druckunterschied zwischen den Orten der Drucksensoren zu erfassen.

6. Durchflussmessgerät nach einem der vorhergehenden Ansprüche,
wobei der Windgeschwindigkeitssensor (111) zwei parallel zueinander angeordnete Platten (401, 402) zum Durchleiten von Luft, deren Windgeschwindigkeit zu erfassen ist, aufweist;
wobei an oder in dem Bereich zwischen den beiden Platten mehrere Drucksensoren (421, 422, 423, 424) angeordnet sind, um lokale Druckunterschiede zwischen den Orten der Drucksensoren zu erfassen.

7. Durchflussmessgerät nach Anspruch 6,
wobei die beiden Platten (401, 402) radialsymmetrisch ausgeführt sind.

8. Durchflussmessgerät nach Anspruch 6 oder 7,
wobei eine erste Gruppe an Drucksensoren (421, 422, 423) ringförmig an der Innenseite einer der Platten (401, 402) angeordnet ist.

9. Durchflussmessgerät nach einem der vorhergehenden Ansprüche,
wobei die Steuereinheit (320) zum Berechnen der mittleren Fließgeschwindigkeit und/oder des Durchflusses des Gewässers unter Berücksichtigung des Ortes der lokalen Fließgeschwindigkeit des Gewässers ausgeführt ist.

10. Durchflussmessgerät nach einem der vorhergehenden Ansprüche,
wobei der Windgeschwindigkeitssensor (111) auf der Oberseite (112) eines Gehäuses des Fließgeschwindigkeitssensors (110) angebracht ist.

11. Durchflussmessgerät nach einem der Ansprüche 1 bis 9,
wobei der Windgeschwindigkeitssensor (111) in dem Gehäuse des Fließgeschwindigkeitssensors (110) angeordnet ist.

12. Durchflussmessgerät nach einem der vorhergehenden Ansprüche, aufweisend:
mehrere Windgeschwindigkeitssensoren (111), welche unterschiedliche Windmessrichtungen aufweisen.

13. Verfahren zur Durchflussmessung, aufweisend die Schritte:
Erfassen einer lokalen Fließgeschwindigkeit eines Gewässers (101) durch ein Durchflussmessgerät (110, 111);
Erfassen der Windgeschwindigkeit am Ort des Messgeräts;
Berechnen der mittleren Fließgeschwindigkeit des Gewässers unter Berücksichtigung der lokalen Fließgeschwindigkeit und der Windgeschwindigkeit.

14. Programmelement, das, wenn es auf einem Prozessor (320) eines Durchflussmessgeräts (110, 111) ausgeführt wird, das Messgerät anleitet, die folgenden Schritte durchzuführen:
Erfassen einer lokalen Fließgeschwindigkeit eines Gewässers (101) durch das Durchflussmessgerät;
Erfassen der Windgeschwindigkeit am Ort des Messgeräts;
Berechnen der mittleren Fließgeschwindigkeit des Gewässers unter Berücksichtigung der lokalen Fließgeschwindigkeit und der Windgeschwindigkeit.

15. Computerlesbares Medium, auf dem ein Programmelement nach Anspruch 14 gespeichert ist.

## Geänderte Patentansprüche

### Geänderte Patentansprüche gemäss Regel 137(2) EPÜ.

1. Durchflussmessgerät, aufweisend:
einen berührungslos messenden Fließgeschwindigkeitssensor (110) zum Erfassen einer lokalen Fließgeschwindigkeit eines Gewässers;
einen Windgeschwindigkeitssensor (111) zum Erfassen der Windgeschwindigkeit;
eine Steuereinheit (320) zum Berechnen der mittleren Fließgeschwindigkeit des Gewässers unter Berücksichtigung der lokalen Fließgeschwindigkeit und der Windgeschwindigkeit;
wobei der Fließgeschwindigkeitssensor (110) zur Durchführung einer Pegelstandmessung und einer Dopplermessung ausgeführt ist, deren Messergebnisse von der Steuereinheit (320) zum Berechnen der mittleren Fließgeschwindigkeit oder des Durchflusses des Gewässers zu berücksichtigen sind;
wobei der Windgeschwindigkeitssensor (111) auf der Oberseite (112) eines Gehäuses oder in dem Gehäuse des Fließgeschwindigkeitssensors (110) angebracht ist.

2. Durchflussmessgerät nach Anspruch 1,
wobei der Windgeschwindigkeitssensor (111) an dem Fließgeschwindigkeitssensor (110) angebracht ist oder in den Fließgeschwindigkeitssensor integriert ist.

3. Durchflussmessgerät nach Anspruch 1 oder 2,
wobei der Windgeschwindigkeitssensor (111) zum Erfassen der Windrichtung ausgeführt ist;
wobei die erfasste Windrichtung von der Steuereinheit (320) zum Berechnen des Durchflusses des Gewässers zu berücksichtigen ist.

4. Durchflussmessgerät nach einem der vorhergehenden Ansprüche,
wobei der Windgeschwindigkeitssensor (111) einen rohrartigen Bereich (301, 302) mit variierendem Querschnitt zum Durchleiten von Luft, deren Windgeschwindigkeit zu erfassen ist, aufweist;
wobei an oder in dem rohrartigen Bereich mehrere Drucksensoren (310, 311) angeordnet sind, um einen lokalen Druckunterschied zwischen den Orten der Drucksensoren zu erfassen.

5. Durchflussmessgerät nach einem der vorhergehenden Ansprüche,
wobei der Windgeschwindigkeitssensor (111) zwei parallel zueinander angeordnete Platten (401, 402) zum Durchleiten von Luft, deren Windgeschwindigkeit zu erfassen ist, aufweist;
wobei an oder in dem Bereich zwischen den beiden Platten mehrere Drucksensoren (421, 422, 423, 424) angeordnet sind, um lokale Druckunterschiede zwischen den Orten der Drucksensoren zu erfassen.

6. Durchflussmessgerät nach Anspruch 5,
wobei die beiden Platten (401, 402) radialsymmetrisch ausgeführt sind.

7. Durchflussmessgerät nach Anspruch 5 oder 6,
wobei eine erste Gruppe an Drucksensoren (421, 422, 423) ringförmig an der Innenseite einer der Platten (401, 402) angeordnet ist.

8. Durchflussmessgerät nach einem der vorhergehenden Ansprüche,
wobei die Steuereinheit (320) zum Berechnen der mittleren Fließgeschwindigkeit und/oder des Durchflusses des Gewässers unter Berücksichtigung des Ortes der lokalen Fließgeschwindigkeit des Gewässers ausgeführt ist.

9. Durchflussmessgerät nach einem der vorhergehenden Ansprüche, aufweisend:
mehrere Windgeschwindigkeitssensoren (111), welche unterschiedliche Windmessrichtungen aufweisen.

10. Verfahren zur Durchflussmessung, aufweisend die Schritte:
Erfassen einer lokalen Fließgeschwindigkeit eines Gewässers (101) durch ein Durchflussmessgerät (110, 111);
Erfassen der Windgeschwindigkeit am Ort des Messgeräts;
Berechnen der mittleren Fließgeschwindigkeit des Gewässers unter Berücksichtigung der lokalen Fließgeschwindigkeit, der Windgeschwindigkeit und des Ortes der lokalen Fließgeschwindigkeit des Gewässers.

11. Programmelement, das, wenn es auf einem Prozessor (320) eines Durchflussmessgeräts (110, 111) ausgeführt wird, das Messgerät anleitet, die folgenden Schritte durchzuführen:
Erfassen einer lokalen Fließgeschwindigkeit eines Gewässers (101) durch das Durchflussmessgerät;
Erfassen der Windgeschwindigkeit am Ort des Messgeräts;
Berechnen der mittleren Fließgeschwindigkeit des Gewässers unter Berücksichtigung der lokalen Fließgeschwindigkeit, der Windgeschwindigkeit und des Ortes der lokalen Fließgeschwindigkeit des Gewässers.

12. Computerlesbares Medium, auf dem ein Programmelement nach Anspruch 11 gespeichert ist.
